# EUROPÄISCHE PATENTANMELDUNG

(11) **EP 2 022 992 A1**
(43) Veröffentlichungstag der Anmeldung: **11.02.2009**
(21) Anmeldenummer: 07114194.9
(22) Anmeldetag: 10.08.2007
(51) Int. Cl.: F16B 21/02

(54) **Gewindelose Bolzen-Mutter-Verbindung**

(71) Anmelder: Houben, Dietmar, 42329 Wuppertal (DE)
(72) Erfinder: Houben, Dietmar, 42329 Wuppertal (DE)
(74) Vertreter: Eberlein, Jasper

(57) **Zusammenfassung**

Die Erfindung bezieht sich auf eine schraubgewindelose Bolzen-Mutter-Verbindung (10) mit einem Bolzen (14) und einer Mutter (12). Die Mutter (12) weist ein Mutterloch (40) auf, in das der Bolzen (14) mit seinem Bolzenschaft (18) eingesteckt und fixiert ist. Der Bolzenschaft (18) weist mindestens zwei symmetrische radiale Klemmnocken (21, 22, 23) auf. Das Mutterloch (18) weist eine zu dem Querschnitt des Bolzenschaftes korrespondierenden und vergrößerten Loch-Querschnitt mit Klemmflächen (41, 42, 43) auf. Die Anzahl an Klemmflächen (41, 42, 43) ist gleich mit der Anzahl der Klemmnocken (21, 22, 23). Der Klemmflächen-Innenkreis (52) ist kleiner als der Klemmnocken-Außenkreis (50).

## Beschreibung

Die Erfindung bezieht sich auf eine gewindelose Bolzen-Mutter-Verbindung mit einem Bolzen und einem einstückigen Mutterteil, in dessen Mutterloch der Bolzen mit seinem Bolzenschaft eingesteckt und fixiert ist.

Derartige Verbindungen sind insbesondere als Gewindebolzen/Gewindemutter-Verbindung bekannt. Eine axiale Fixierung kann in der Regel erst durch eine Vielzahl von Umdrehungen der Gewindeschraube bzw. der Gewindemutter in einer einzigen Drehrichtung erfolgen.

Aus DE 4209153 ist eine gewindelose Bolzen-Mutter-Verbindung bekannt, bei der am Umfang des Bolzenschaftes mehrere keilförmige Erhebungen und auf der Innenseite des Mutterloches die gleiche Anzahl entsprechender keilförmiger Ausnehmungen vorgesehen ist. Zur Befestigung dieser Bolzen-Mutter-Verbindung mit einem weiteren Maschinenteil wird die Mutter axial bis zum Anschlag auf den Bolzenschaft aufgeschoben und anschließend gegenüber dem Bolzenschaft in eine einzige bestimmte Drehrichtung gedreht, also angezogen. Hierbei entsteht zwischen den Keilflächen des Bolzens und der Mutter ein selbsthemmender Kraftfluss. Zur Sicherstellung eines ausreichenden Kraftschlusses ist die Steigung der Keilflächen sehr gering. Daher eignet sich diese Bolzen-Mutter-Verbindung nicht für kleine Durchmesser des Bolzens bzw. des Bolzenschaftes und des Mutterloches.

Aufgabe der Erfindung ist es demgegenüber, eine Bolzen-Mutter-Verbindung zu schaffen, die schnell montierbar ist und auch bei kleinen Abmessungen einen sicheren und dauerhaften Halt ermöglicht.

Diese Aufgabe wird erfindungsgemäß gelöst mit den Merkmalen des Patentanspruches 1.

Bei der erfindungsgemäßen gewindelosen Bolzen-Mutter-Verbindung weist der Bolzenschaft mindestens zwei zu einer Radialen jeweils symmetrische radiale Klemmnocken auf. Das Mutterloch weist einen zu dem Querschnitt des Bolzenschaftes einschließlich der Klemmnocken korrespondierenden und vergrößerten Loch-Querschnitt mit Klemmflächen auf. Die Anzahl der Klemmflächen, deren Krümmung erheblich größer ist als die Krümmung der bolzenseitigen Nocken, ist gleich mit der Nocken-Anzahl. Der Klemmflächen-Innenkreis, der die Umfangsmitten der nach radial innen ragenden Klemmflächen berührt, ist kleiner als der Klemmnocken-Außenkreis, der die Nockenspitzen berührt.

Unter einer Mutter ist vorliegend nicht notwendigerweise ein kleines Teil zu verstehen, sondern grundsätzlich ist hierunter jede Struktur zu verstehen, die ein entsprechendes Mutterloch aufweist. Die äußere Form der Mutter ist nicht wesentlich.

Zur Herstellung der Verbindung zwischen dem Bolzen und der Mutter wird zunächst der Bolzenschaft überschneidungsfrei mit dem Mutterloch ausgerichtet und werden dann beide ineinander geschoben, bis die gewünschte Axialposition zueinander erreicht ist. Anschließend wird der Bolzen gegenüber der Mutter in einer wählbaren Drehrichtung verdreht, so dass der Bolzenschaft mit seinen radialen Klemmnocken schließlich in dem Mutterloch im Mittelbereich ihrer Klemmflächen kraftschlüssig verklemmt.

Die Klemmflächen, die Klemmnocken, die Differenz bzw. das Verhältnis zwischen Klemmflächen-Innenkreis und Klemmnocken-Außenkreis, die Materialhärte und -elastizität des Bolzenmaterials und des Muttermaterials sowie andere Parameter sind so aufeinander abgestimmt, dass sich in der Klemmposition ein ausreichender Reibschluss ergibt und/oder dass die Klemmnocken auf den Klemmflächen Mutter-Material elastisch und/oder plastisch verdrängen, so dass sich die Klemmnocken ihre eigenen Rastnuten in den Klemmflächen schaffen. Auf diese Weise lassen sich sehr hohe Haltekräfte realisieren, die auch über lange Zeit und bei hohen thermischen und dynamischen Belastungen stabil bleiben. Bevorzugt weist der Klemmnocken-Außenkreis-Durchmesser mindestens das 1,01fache des Klemmflächen-Innenkreis-Durchmessers auf.

Da eine geringe radiale Steigung einer beteiligten Bolzen- bzw. Mutter-Fläche nicht erforderlich ist, kann die vorliegende Bolzen-Mutter-Verbindung auch für sehr kleine Durchmesser verwendet werden, ohne dass sich ihre Halteeigenschaften nennenswert verschlechtern. Wegen ihrer Symmetrie kann die vorliegende Bolzen-Mutter-Verbindung in beiden Richtungen angezogen werden, ist also, im Gegensatz zu Schraubgewinde-Verbindungen und zu Keilflächen-Verbindungen, nicht richtungsgebunden.

Vorzugsweise sind der Bolzenschaft und das Mutterloch glattflächig ausgebildet, das heißt, es sind keine aus der Grundfläche herausragenden Elemente im Bereich der Klemmnocken und im Bereich der Klemmflächen vorgesehen. Alternativ kann für eine Verbindung mit hohen axialen Kräften bevorzugt vorgesehen werden, dass im Bereich der Klemmnocken tangentiale und radial nach außen ragende Schneidrippen angeordnet sind. Diese Schneidrippen schneiden sich beim Eingriff in die betreffenden Mutter-Klemmflächen in die Klemmflächen hinein. Da die Schneidrippen tangential, also in Umfangsrichtung, ausgerichtet sind, wird bei Auftreten einer axialen Zugkraft keine tangentiale Kraftkomponente generiert. Eine axiale Belastung kann also keine Öffnungskräfte generieren, wie dies bei einem Schraubgewinde der Fall wäre. Die Schneidrippen verbessern erheblich die axialen Haltekräfte zwischen dem Bolzen und der Mutter.

Vorzugsweise sind drei oder mehr Klemmnocken an dem Bolzenschaft und entsprechend drei oder mehr Klemmflächen in dem Mutterloch vorgesehen.

In der Mitte der Klemmflächen kann eine axiale Rastnut vorgesehen sein, in die der jeweilige Klemmnocken einrasten kann. Hierdurch wird zwar die axiale Haltekraft verschlechtert, jedoch kann ein Lösen der Verbindung in Umfangsrichtung insbesondere durch Vibrationen u.ä. praktisch ausgeschlossen werden. Die Rastnut muss nicht durchgehend sein. Ferner muss nicht jede der Klemmflächen eine Rastnut aufweisen.

Gemäß einer bevorzugten Ausgestaltung ist der Querschnitt des Bolzenschaftes annähernd ein sogenanntes "Mehrbogen-Gleicheck". Die Flächen des Bolzenschaftes zwischen den Klemmnocken sind zylindrisch, wobei die Zylinderachsen jeweils in der Ebene einer anderen Klemmfläche liegen. Eine derartige Querschnittsform des Bolzenschaftes und des Mutterloches ist relativ einfach herstellbar.

Gemäß einer bevorzugten Ausgestaltung weist der Bolzen einen Bolzenkopf auf, der radial über den Bolzenschaft hinausragt. Der Bolzenkopf kann auf diese Weise eine axiale Abstützung gegenüber einem Maschinenteil bilden.

Vorzugsweise weist der Bolzenkopf radiale Kopfnocken auf, die mit den Klemmnocken des Bolzenschaftes axial ausgerichtet sind und über diese radial hinausragen. Das korrespondierende Mutterloch weist einen Querschnitt auf, der mit der Einhüllenden des Bolzens korrespondiert und geringfügig größer als diese ist. Der Bolzen kann also einschließlich seines Bolzenkopfes vollständig durch das Mutterloch hindurchgesteckt werden. Beim Verdrehen des Bolzens gegenüber der Mutter in die Verriegelungsposition überlappen sich dann der Bolzenkopf und der Mutterring, so dass der Bolzen axial gegenüber der Mutter abgestützt ist. Hierdurch kann die Montage, auch mit einem weiteren Maschinenteil, gegebenenfalls erheblich erleichtert sein.

Vorzugsweise weist der Bolzen eine Formschlussstruktur zum Ansetzen eines Drehwerkzeuges auf. Da zum Verdrehen des Bolzens gegenüber der Mutter ein hohes Drehmoment aufgebracht werden muss, ist das Ansetzen eines Drehwerkzeuges praktisch unerlässlich. Hierzu weist der Bolzen eine entsprechende Formschlussstruktur auf. Dabei kann es sich um eine Bohrung in dem Bolzenschaft oder in dem Bolzenkopf handeln, oder aber um andere bekannte mehrkantige Strukturen, einschließlich Innenvielkant, Außenvielkant, Innenvielzahn, Außenvielzahn etc. Die Formschlussstruktur kann an einem Längsende des Bolzens, kann jedoch auch dazwischen vorgesehen sein.

Vorzugsweise weist der Bolzen an einem Endabschnitt ein Schraubgewinde auf. An dem Schraubgewinde-Endabschnitt kann zusätzlich eine Gewindemutter u.ä. aufgeschraubt werden.

Alternativ kann der Bolzen zwei durch einen nicht-klemmenden Mittelabschnitt voneinander getrennte Endabschnitte mit Klemmnocken aufweisen. Mit einem derartigen Bolzen können zwei Muttern durch den Bolzen miteinander fest verbunden werden.

Gemäß einer bevorzugten Ausgestaltung weist der Bolzen eine axiale Durchsteckbohrung auf. In die Durchsteckbohrung kann ein weiteres Befestigungsmittel, beispielsweise eine Gewindeschraube, eingesteckt werden, so dass auf diese Weise ein weiteres Teil, beispielsweise ein Montageteil, mit der Mutter verbunden werden kann, wobei die Gewindeschraube in das Montageteil eingeschraubt wird.

Alternativ kann der Bolzen auch eine axiale Gewindebohrung aufweisen, in die eine Gewindeschraube eingeschraubt werden kann, um mit ihrer Hilfe ein weiteres Montageteil an der Mutter zu fixieren.

Vorzugsweise weist die Mutter einen axialen Montageschlitz auf, durch den ein radialer Zugang zu dem Mutterloch hergestellt wird. Der Montageschlitz kann sich auf einen Teil der axialen Länge der Mutter erstrecken, oder aber über die gesamte axiale Länge der Mutter. Durch den Montageschlitz ist es möglich, auf den in das Mutterloch eingesteckten Bolzen seitlich zugreifen zu können. Auf diese Weise kann der in das Mutterloch vollständig versenkte Bolzen mit einem Drehwerkzeug seitlich ergriffen und gedreht werden, wenn ein Zugriff auf den Bolzen von axial unten oder oben nicht möglich ist.

Im Folgenden werden unter Bezugnahme auf die Zeichnungen mehrere Ausführungsbeispiele der Erfindung näher erläutert.

Es zeigen:
- Fign. 1a und 1b: eine Bolzen-Mutter-Verbindung in ihrer Grundform als Außendreikant-Bolzen und Innendreikant-Mutter in Montageposition und in Klemmposition,
- Fig. 2: ein zweites Ausführungsbeispiel einer Bolzen-Mutter-Verbindung mit einem Bolzen mit einem erweiterten Bolzenkopf, der in der Montageposition des Bolzens durch das Mutterloch hindurchsteckbar ist und in der Klemmposition des Bolzens sich axial an der Mutter abstützt,
- Fig. 3: ein drittes Ausführungsbeispiel einer Bolzen-Mutter-Verbindung mit einem Bolzen, der einen glattzylindrischen Abschnitt zwischen dem Bolzenkopf und den Klemmnocken aufweist,
- Fig. 4: ein weiteres Ausführungsbeispiel eines Bolzens mit zwei endseitigen Klemmnocken-Abschnitten und einer Formschlussstruktur in Form einer durchgehenden Bohrung in der Mitte,
- Fig. 5: ein weiteres Ausführungsbeispiel eines Bolzens mit zwei endseitigen Klemmnocken-Abschnitten und einer Formschlussstruktur in der Mitte in Form einer Scheibe,
- Fig. 6: ein weiteres Ausführungsbeispiel eines Bolzens mit jeweils ein Schraubgewinde verschiedener Durchmesser aufweisenden Endabschnitten, einem mittigen Klemmnocken-Abschnitt und einer Schraubkappe,
- Fig. 7: ein weiteres Ausführungsbeispiel eines Bolzens mit einem Schraubgewinde an einem Längsende und einem Bolzenkopf mit einer Anschlagstruktur an dem anderen Längsende,
- Fig. 8: ein Bauteil, das außenseitig als Bolzen und innenseitig als Mutter ausgebildet ist,
- Fig. 9: eine Bolzen-Mutter-Verbindung mit einem Mutterloch, das in einem Blech ausgebildet ist,
- Fign. 10a - 10c: drei verschiedene Bolzen-Mutter-Verbindungen mit vier, fünf bzw. sechs Nocken, und
- Fign. 11a, 11b: ein weiteres Ausführungsbeispiel einer Bolzen-Mutter-Verbindung mit einem eine axiale Durchsteckbohrung aufweisenden Bolzen, in den eine Gewindeschraube zur Fixierung eines weiteren Montageteiles an der Mutter eingesteckt ist.

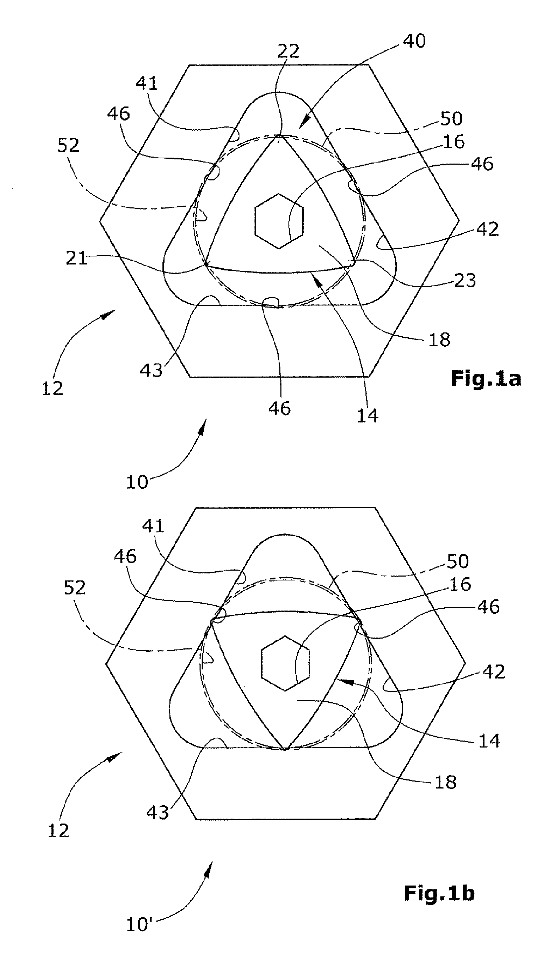

In den Figuren 1a und 1b ist exemplarisch eine Grundform einer gewindelosen Bolzen-Mutter-Verbindung 10, 10' dargestellt. Mit gewindelos ist vorliegend stets gemeint, dass kein Schraubgewinde im Bereich der eigentlichen Verbindung vorhanden ist.

Die Verbindung 10 weist eine Mutter 12 mit einem Außensechskant und einen Bolzen 14 auf. Der Bolzen 14 wird von einem außenseitig glattflächigen Bolzenschaft 18 gebildet. Am Bolzenkopf ist ein Innensechskant 16 ausgeprägt. Der Innensechskant 16 des Bolzens 14 bildet eine Formschlussstruktur zum Ansetzen eines Drehwerkzeuges.

Unter einer Mutter ist in Bezug auf die Erfindung ein Bauteil beliebiger Außenform zu verstehen, soweit es die beschriebene innere Struktur, d. h. das Mutterloch 40, aufweist.

Der Bolzenschaft 18 weist über seine gesamte axiale Länge jeweils zu einer Radialen symmetrische radiale Klemmnocken 21, 22, 23 auf. Der Querschnitt des Bolzenschaftes 18 entspricht dem eines Mehrbogen-Gleicheckes.

Die Mutter 12 weist ein entsprechendes Mutterloch 40 auf, das eine zu dem Querschnitt des Bolzenschaftes 18 korrespondierenden und vergrößerten Loch-Querschnitt mit drei korrespondierenden Klemmflächen 41, 42, 43 aufweist. Die Klemmflächen 41, 42, 43 sind i. d. Regel glattflächig und werden bis zum Kontaktanschlag gedreht und halten dann aufgrund der mechanischen Vorspannung in radialer Richtung in ihrer Klemmposition. In der Mitte der drei Klemmflächen 41, 42, 43 kann jeweils eine axiale Rastnut 46 vorgesehen sein, die eine Nuttiefe von mindestens 1/30 des Klemmnocken-Außenkreises aufweist.

Sowohl der Bolzen 14 als auch die Mutter 12 sind aus Metall gefertigt, können jedoch auch aus Holz, Kunststoff oder anderen Materialien bestehen. Die Mutter und der Bolzen können aus identischem Material bestehen. Wenn der Bolzen 14 und die Mutter 12 aus demselben Material bestehen, sollten in der Regel keine Schneidkanten vorgesehen werden. Der Bolzen 14 und die Mutter 12 können beispielsweise beide aus demselben Polyamid bestehen, das so elastisch ist, dass sich eine hohe elastische Vorspannung in der Klemmposition realisieren lässt. Es findet also kein plastisches Verkerben, sondern eine elastische Verformung insbesondere der Klemmflächen 41, 42, 43 statt, so dass diese im Falle des Lösens der Verbindung in ihre Ursprungsform zurückkehren.

Vorteilhaft ist jedoch, dass die Mutter 12 aus einem weicheren Material besteht, als der Bolzen 14.

In der Figur 1b sind die Mutter 12 und der Bolzen 14 in der Klemmposition dargestellt. Der Bolzen 14 wurde hierzu mit einem an der Formschlussstruktur, dem Innensechskant 16, ansetzenden Drehwerkzeug um ungefähr 60° verdreht, wobei der Bolzen 14 sowohl im Uhrzeigersinn als auch gegen den Urzeigersinn entsprechend verdreht werden kann.

Bei einem Klemmnocken-Außenkreis-Durchmesser von 5,15 mm weist der Innenkreis 52 der Klemmflächen 41, 42, 43 ungefähr einen Durchmesser von 4,9 mm auf. Bei größeren Klemmnocken-Außenkreisen-Durchmessern ändert sich der Inkreis der Klemmflächen entsprechend proportional. In der in der Figur 1b dargestellten Klemmposition verklemmen die drei Klemmnocken 21, 22, 23 in den mittleren Bereichen der jeweiligen Klemmflächen 41, 42, 43. In der Mitte der Klemmflächen 41, 42, 43 rasten die Klemmnocken 21, 22, 23 in die jeweiligen Rastnuten 46 ein. Ferner wird durch die drei Klemmnocken 21, 22, 23 jeweils Material der Mutter 12 elastisch und/oder plastisch verdrängt. Hierdurch ergibt sich ein sehr fester Sitz des Bolzens 14 in der in der Figur 1b dargestellten Klemmposition, und zwar sowohl in Bezug auf die Umfangsrichtung als auch auf die Axiale.

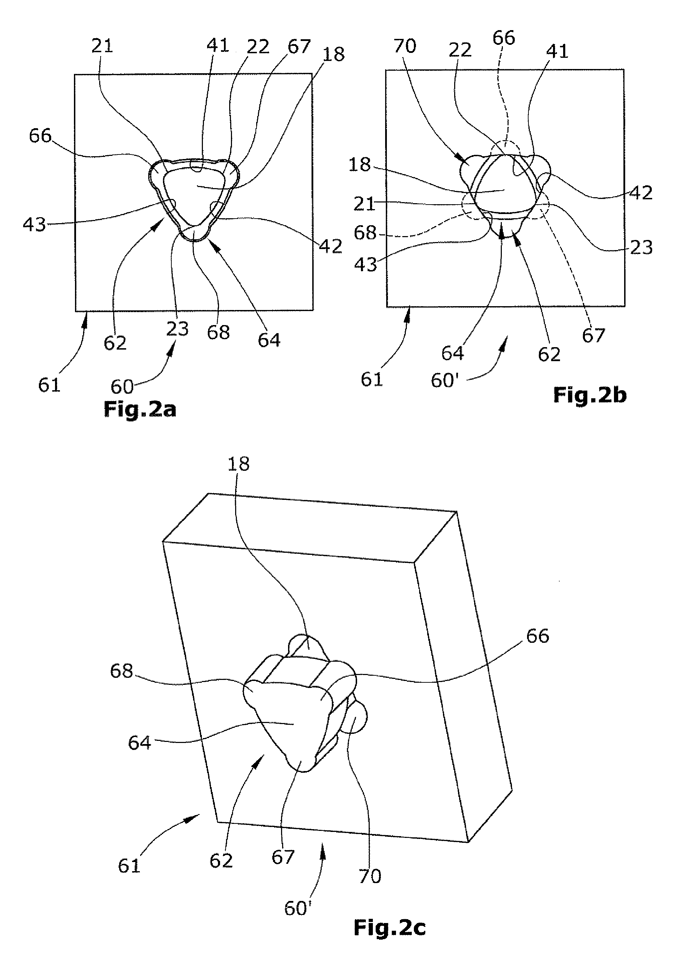

In den Figuren 2A - 2C ist eine weitere Ausführungsform einer gewindelosen Bolzen-Mutter-Verbindung 60 dargestellt.

Der Bolzen 62 der Verbindung 60 weist einen Bolzenkopf 64 auf, der radial über den gesamten Umfang über den Bolzenschaft 18 hinausragt. Insbesondere im Bereich der Klemmnocken 21, 22, 23 des Bolzenschaftes 18 sind radial über die Klemmnocken 21, 22, 23 hinausragende Kopfnocken 66, 67, 68 vorgesehen. Ein entsprechendes Drehwerkzeug kann an den Bolzenschaft angesetzt werden.

Das Mutterloch 70 weist einen entsprechenden Querschnitt zu dem Querschnitt des Bolzenkopfes 64 auf. Das Mutterloch 70 korrespondiert mit seinem Querschnitt mit der Einhüllende des Bolzens 62 in Draufsicht. Das Mutterloch 70 ist also geringfügig größer als die Einhüllende des Bolzens 62, die im vorliegenden Fall identisch ist mit der äußeren Kontur des Bolzenkopfes 64. Auf diese Weise kann der Bolzen 62 einschließlich seines Bolzenkopfes 64 in der Montageposition durch das Mutterloch 40 hindurchgesteckt werden. Erst beim Verdrehen des Bolzens 62 in seine in den Figuren 2B und 2C dargestellte Klemmposition überdeckt der Bolzenkopf 64 die Mutter 61 im Bereich der Klemmflächen 41, 42, 43. Hierdurch wird der Bolzen 62 in der Einsteckrichtung axial an der Mutter 61 abgestützt.

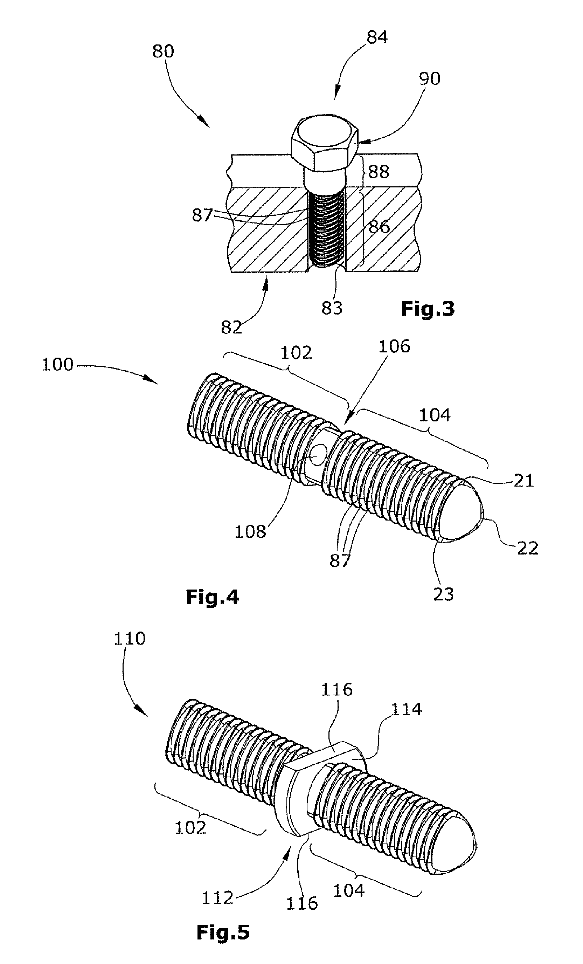

In der Figur 3 ist ein weiteres Ausführungsbeispiel einer Verbindung 80 dargestellt, die von einer Mutter 82 mit einem Mutterloch 83 und einem Bolzen 84 gebildet wird. Der Bolzen 84 weist einen Bolzenschaft 86 mit drei Klemmnocken auf. An den Bolzenschaft 86 schließt ein glattflächiger Zylinderabschnitt 88 an, an den sich wiederum ein vergrößerter Bolzenkopf 90 anschließt, der einen Außensechskant aufweist.

Der Schaftkörper 86 weist mehrere zueinander parallele, tangentiale und umlaufende Schneidrippen 87 auf, die jeweils exakt in einer Querebene liegen, also nicht gewindeartig angeordnet sind. Die Schneidrippen 87 schneiden sich beim Verdrehen des Bolzens 84 in die Klemmposition in die Innenwand des Mutterloches 83 ein. Da der Bolzen 84 aus einem härteren Material besteht als die Mutter 82, schneiden sich die Schneidrippen 87 im Bereich der Klemmflächen in das Mutterloch bzw. in die Innenwand des Mutterloches 83 ein. Hierdurch wird insbesondere die axiale Fixierung des Bolzens 84 in der Mutter 82 verbessert.

In der Figur 4 ist ein weiteres Ausführungsbeispiel eines Bolzens 100 einer nicht dargestellten Bolzen-Mutter-Verbindung dargestellt. Der Bolzen 100 weist zwei getrennte Endabschnitte 102, 104 mit Klemmnocken 21, 22, 23 sowie mit Schneidrippen 87 auf. Zwischen den beiden Endabschnitten 102, 104 ist ein nicht klemmender Mittelabschnitt 106 vorgesehen, der als Formschlussstruktur eine durchgehende radiale Bohrung 108 aufweist.

In der Figur 5 ist ein dem Bolzen 100 der Figur 4 ähnlicher Bolzen 110 dargestellt, der im Mittelabschnitt 112 eine Distanz-Scheibe 114 aufweist, die mindestens zwei ebene Umfangsflächen 116 zum Ansetzen eines Drehwerkzeuges aufweist.

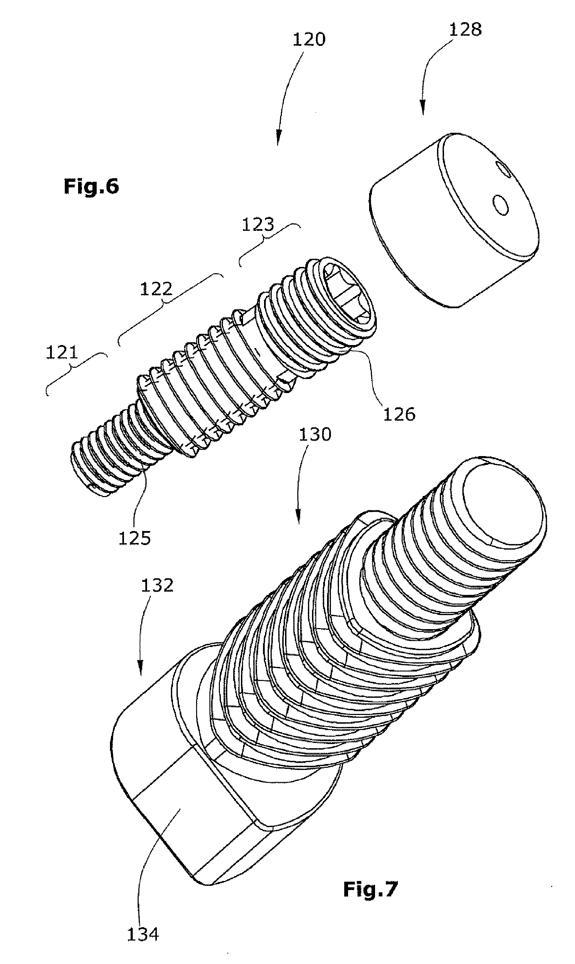

In der Figur 6 ist ein Bolzen 120 dargestellt, der drei Längsabschnitte 121, 122, 123 aufweist. Der mittige Abschnitt 122 bildet einen Bolzenschaft mit drei Klemmnocken und mehreren parallelen Schneidrippen. Die beiden angrenzenden Endabschnitte 121, 123 weisen jeweils ein Außengewinde 125, 126 auf. An das Außengewinde 125, 126 können weitere Montageelemente, Bauteile u. ä. mit einem entsprechenden Innengewinde angesetzt werden.

Mit einer Schraubkappe 128, die ein entsprechendes Innengewinde zu dem Außengewinde 126 eines Endabschnittes 123 aufweist, kann beispielsweise nach der Fixierung des mittleren Abschnittes 122 in einer Mutter ein axialer Anschlag im Bezug auf die Mutter realisiert werden. Hierdurch wird der Bolzen 120 in einer Richtung axial abgestützt an der Mutter.

In der Figur 7 ist ein weiteres Ausführungsbeispiel eines Bolzens 130 dargestellt, der gegenüber dem Bolzen 120 der Figur 6 an einem Längsende einen festen einstückigen Bolzenkopf 132 mit einer Anschlagfläche 134 aufweist.

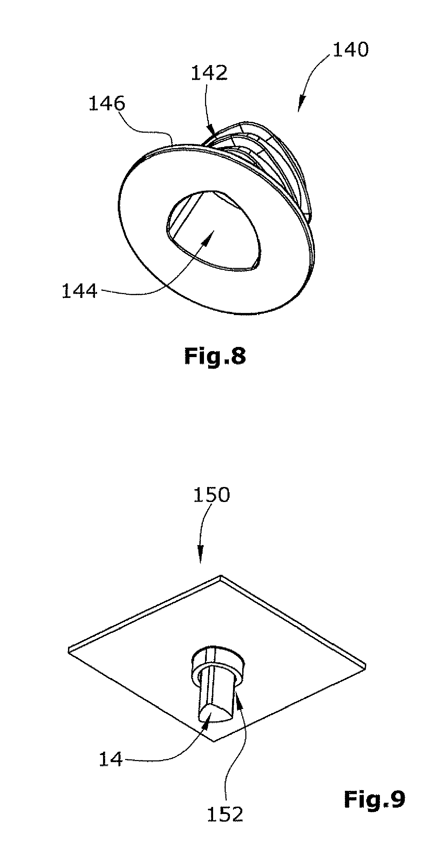

In der Figur 8 ist ein Bauteil 140 dargestellt, das außenseitig einen Bolzen 142 und innenseitig eine Mutter 144 bildet. Ferner ist ein den Bolzen 142 radial überragender Anschlagring 146 vorgesehen.

In der Figur 9 ist eine Bolzen-Mutter-Verbindung 150 dargestellt, die von einem Bolzen 14, wie er in den Figuren 1a und 1b dargestellt ist, und einer Mutter 152 besteht, die aus einem Metallblech tiefgezogen wurde.

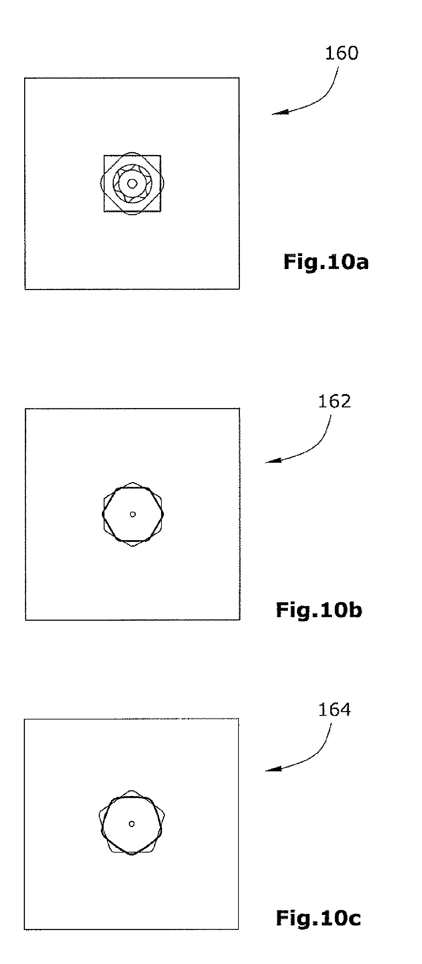

In den Figuren 10a, 10b, 10c sind weitere Ausführungsformen von Bolzen-Mutter-Verbindungen 160, 162, 164 dargestellt, wobei der Bolzen und die Mutter jeweils vier, fünf bzw. sechs Klemmnocken und Klemmflächen aufweisen.

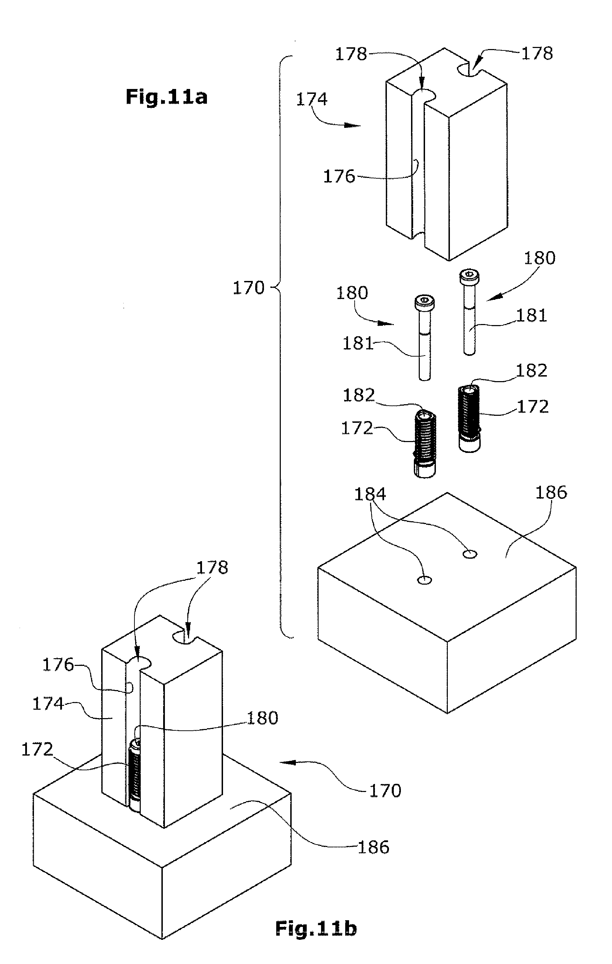

In den Figuren 11a und 11b ist eine weitere Ausführungsform einer gewindelosen Bolzen-Mutter-Verbindung 170 dargestellt. Die Mutter 174 ist vorliegend ein blockförmiges Teil, das zwei zueinander parallele Mutterlöcher 178 aufweist. Die Mutter 174 weist im Bereich der Mutterlöcher 178 jeweils einen axialen durchgehenden Montageschlitz 176 auf, durch ein Drehwerkzeug in das Mutterloch 178 radial eingeführt werden kann.

Der Bolzen 172 weist eine durchgehende axiale Durchsteckbohrung 182 auf, durch die eine Gewinde-Schraube 180 hindurchgesteckt werden kann. Die Gewindeschraube 180 kann mit ihrem Schraubgewinde 181 in korrespondierende Gewindebohrungen 184 eines Montageteils 186 eingeschraubt werden.

Auf diese Weise ist es möglich, das Montageteil 186 mit dem Bolzen 172 und über den Bolzen 172 mit der Mutter 174 zu verbinden. Die Verbindung wird hergestellt, indem zunächst der Bolzen 172 axial in das jeweilige Mutterloch 178 eingesetzt und in seine Fixier- bzw. Klemmposition verdreht wird. Anschließend wird die Schraube 180 in die Durchsteckbohrung 182 des Bolzens 172 eingesteckt und die Schraube 180 in die Gewindebohrungen 184 des Montageteiles 186 eingeschraubt.

Grundsätzlich kann auch zunächst mit der Schraube 180 der Bolzen 172 so fixiert werden, dass er noch drehbar ist. Anschließend wird die Mutter 174 mit ihren beiden Mutterlöchern auf die Bolzen 172 aufgesetzt bzw. werden die Bolzen 172 in die Mutterlöcher 178 eingeführt. Anschließend werden die beiden Bolzen 172 in ihrer Klemmposition verdreht.

Der Montageschlitz 176 dient zum Ansetzen eines Drehwerkzeuges zum Drehen der Schraube 180 und gegebenenfalls zum Drehen des Bolzens 172 in die Fixier- bzw. Klemmpositionen.

Als Materialien für den Bolzen und/oder die Mutter kommen insbesondere Stahl, Zinkdruckguss, Aluminium oder Kunststoff in Frage. Als Fertigungsverfahren kommen das Fließpressen, das Gießen, das Drehen, das Laserschneiden, das Wasserstrahlschneiden, das Drehen oder andere bekannte Verfahren in Frage. Für die Mutter kommt ferner auch Holz als Material in Frage.

## Patentansprüche

1. Gewindelose Bolzen-Mutter-Verbindung (10) mit einem Bolzen (14) und einer Mutter (12), in deren Mutterloch (40) der Bolzen (14) mit seinem Bolzenschaft (18) eingesteckt und fixiert ist, wobei
der Bolzenschaft (18) mindestens zwei zu einer Radialen symmetrische radiale Klemmnocken (21, 22, 23) aufweist,
das Mutterloch (40) eine zu dem Querschnitt des Bolzenschaftes (18) korrespondierenden und vergrößerten Loch-Querschnitt mit Klemmflächen (41, 42, 43) aufweist,
die Anzahl an Klemmflächen (41, 42, 43) gleich ist mit der Anzahl der Klemmnocken (21, 22, 23), und
der Klemmflächen-Innenkreis (52) kleiner als der Klemmnocken-Außenkreis (50) ist.

2. Gewindelose Bolzen-Mutter-Verbindung (10) nach Anspruch 1, **dadurch gekennzeichnet, dass** der Bolzenschaft (18) und das Mutterloch (40) glattflächig ausgebildet sind.

3. Gewindelose Bolzen-Mutter-Verbindung (10) nach Anspruch 1 oder 2, **dadurch gekennzeichnet, dass** der Querschnitt des Bolzenschaftes (18) annähernd ein Mehrbogen-Gleicheck ist.

4. Gewindelose Bolzen-Mutter-Verbindung (10) nach einem der Ansprüche 1 - 3, **dadurch gekennzeichnet, dass** mindestens drei Klemmnocken (21, 22, 23) vorgesehen sind.

5. Gewindelose Bolzen-Mutter-Verbindung (80) nach einem der Ansprüche 1 - 4, **dadurch gekennzeichnet, dass** der Bolzenschaft (86) im Bereich der Klemmnocken tangentiale Schneidrippen (87) aufweist.

6. Gewindelose Bolzen-Mutter-Verbindung (60) nach einem der Ansprüche 1 - 5, **dadurch gekennzeichnet, dass** der Bolzen (62) einen Bolzenkopf (64) aufweist, der radial über den Bolzenschaft (18) hinausragt.

7. Gewindelose Bolzen-Mutter-Verbindung (60) nach Anspruch 6, **dadurch gekennzeichnet, dass** der Bolzenkopf (64) radiale Kopfnocken (66) aufweist, die mit den Klemmnocken (21, 22, 23) axial ausgerichtet sind und über diese radial hinausragen, wobei das Mutterloch (70) einen Querschnitt aufweist, der mit der Einhüllenden des Bolzens (62) korrespondiert.

8. Gewindelose Bolzen-Mutter-Verbindung (10) nach einem der Ansprüche 1 - 7, **dadurch gekennzeichnet, dass** der Bolzen (14) eine Formschlussstruktur (16) zum Ansetzen eines Drehwerkzeuges aufweist.

9. Gewindelose Bolzen-Mutter-Verbindung nach einem der Ansprüche 1 - 8, **dadurch gekennzeichnet, dass** der Bolzen (120) an einem Endabschnitt (121, 123) ein Schraubgewinde (125, 126) aufweist.

10. Gewindelose Bolzen-Mutter-Verbindung nach einem der Ansprüche 1 -8, **dadurch gekennzeichnet, dass** der Bolzen (100) zwei durch einen nicht-klemmenden Mittelabschnitt (106) getrennte Endabschnitte (102, 104) mit Klemmnocken (21, 22, 23) aufweist.

11. Gewindelose Bolzen-Mutter-Verbindung nach einem der Ansprüche 1 - 10, **dadurch gekennzeichnet, dass** die Mutter (12) im Bereich der Klemmflächen (41, 42, 43) eine axiale Rastnut (46) aufweist.

12. Gewindelose Bolzen-Mutter-Verbindung nach einem der Ansprüche 1 - 11, **dadurch gekennzeichnet, dass** die Mutter (12) und der Bolzen (14) aus verschiedenen Materialien bestehen, wobei das Material des Bolzens (14) härter ist als das Material der Mutter (12).

13. Gewindelose Bolzen-Mutter-Verbindung (170) nach einem der Ansprüche 1 - 12, **dadurch gekennzeichnet, dass** der Bolzen (172) eine axiale Durchsteckbohrung (182) aufweist.

14. Gewindelose Bolzen-Mutter-Verbindung nach einem der Ansprüche 1 - 12, **dadurch gekennzeichnet, dass** der Bolzen eine axiale Gewindebohrung aufweist.

15. Gewindelose Bolzen-Mutter-Verbindung (170) nach einem der Ansprüche 1 - 14, **dadurch gekennzeichnet, dass** die Mutter (174) einen axialen Montageschlitz (176) aufweist.
